# EUROPÄISCHE PATENTANMELDUNG

(11) **EP 4 663 000 A1**
(43) Veröffentlichungstag der Anmeldung: **17.12.2025**
(21) Anmeldenummer: 25176429.6
(22) Anmeldetag: 14.05.2025
(51) Int. Cl.: A01D 41/127

(54) **LANDWIRTSCHAFTLICHE ARBEITSMASCHINE MIT ZUMINDEST EINER STEUERUNGSEINRICHTUNG**

(30) Priorität: 12.06.2024 DE 102024116461
(71) Anmelder: CLAAS Selbstfahrende Erntemaschinen GmbH, 33428 Harsewinkel (DE)
(72) Erfinder: Thiesmann, Waldemar, 49080 Osnabrück (DE); Bussmann, Christoph, 33428 Harsewinkel (DE); Domnik, Matthias, 59302 Oelde (DE); Vöcking, Henner, 33397 Rietberg (DE); Bormann, Bastian, 33334 Gütersloh (DE); Wilken, Andreas, 49143 Bissendorf (DE)
(74) Vertreter: CLAAS Gruppe

(57) **Zusammenfassung**

Landwirtschaftliche Arbeitsmaschine (1) mit zumindest einer Steuer- und Regeleinrichtung (23), wobei die Steuer- und Regeleinrichtung (23) eingerichtet ist, definiert Messpunkte (54) in hinterlegten Kennlinienfeldern (48) anzusteuern, wobei diese gezielt angesteuerten Messpunkte (54) in den Randbereichen des Kennlinienfeldes (48) und/oder außerhalb eines aktiven Arbeitsbereiches (52, 53) des jeweiligen Kennlinienfeldes (48) liegen,
wobei die Messpunkte (54) angesteuert werden, wenn sich die landwirtschaftliche Arbeitsmaschine (1) in einem unkritischen Zustand befindet.

## Beschreibung

Die vorliegende Erfindung betrifft eine landwirtschaftliche Arbeitsmaschine mit zumindest einer Steuer- und Regeleinrichtung.

Aus dem Stand der Technik ist es bekannt Arbeits- und Qualitätsparameter einer landwirtschaftlichen Arbeitsmaschine mittels einer Steuer- und Regeleinrichtung zu überwachen und zu optimieren. Die Optimierung bzw. die Durchführung einer Optimierungsmethode kann dabei das Ansteuern von Messpunkten umfassen. Mittels der Messpunkte kann die Steuer- und Regeleinrichtung optimiert werden.

Die DE 10 2006 044 628 schlägt hierfür ein Verfahren vor, bei dem stets eine bestimmte Anzahl von Parametern in Abhängigkeit voneinander optimiert werden. Diese punktuelle Regelung von Maschinenparametern wird unter anderem in der DE 10 2009 009 767 dahingehend weiterentwickelt, dass ereignisabhängig eine Optimierung einstellbarer Maschinenparameter vorgenommen wird, wobei der Bediener der landwirtschaftlichen Arbeitsmaschine mittels einer Anzeigeeinheit stets über die ablaufenden Optimierungsvorgänge informiert gehalten wird. Den bekannten Optimierungsmethoden haftet der Nachteil an, dass die Qualität der in den Steuer- und Regeleinrichtungen hinterlegten Kennlinien von den tatsächlich durchlaufenen Betriebspunkten abhängen. Ändern sich hier Maschinen- und Erntegutparameter schlagartig muss die Steuer- und Regeleinrichtung in einem anderen Bereich der hinterlegten Kennlinienfelder agieren, was dazu führen kann, dass diese Kennlinienbereiche zunächst an die neuen Randbedingungen, etwa die Ernteguteigenschaften, angepasst werden müssen. Dies führt dazu, dass derartige Regelungssystem bei sich abrupt ändernden Bedingungen eine gewisse Einschwingzeit benötigen, bevor sie wieder optimal agieren.

Ferner ist aus der DE 10 2013 106 128 A1 eine landwirtschaftliche Arbeitsmaschine gemäß dem Oberbegriff des Anspruchs 1 bekannt.

Einer derartigen landwirtschaftlichen Arbeitsmaschine haftet jedoch möglicherweise der Nachteil an, dass ungünstige Randbedingungen (z.B. eine örtlich überdurchschnittlich hohe Strohfeuchte) bzw. ungünstige externe Einflussfaktoren (z.B. Starke Neigungsänderung oder Bestandsende) zu einem verzerrten Ergebnis des Ansteuerns von Messpunkten bzw. verzerrten Messergebnissen führen. Es könnte sogar sein, dass das Ansteuern von Messpunkten abgebrochen werden muss, wenn sich die auf die landwirtschaftliche Arbeitsmaschine, externen Einflussfaktoren zu stark ändern.

Beispielsweise kann sich die landwirtschaftliche Arbeitsmaschine in einem kritischen Zustand befinden. Ein kritischer Zustand kann ein Betriebszustand bzw. Arbeitsstatus sein, in der die landwirtschaftliche Arbeitsmaschine bei der Betriebsaufgabe gestört wird. Mit anderen Worten kann ein kritischer Zustand eine Situation sein, in der die landwirtschaftlichen Arbeitsmaschine beim Betrieb negativ beeinflusst wird. Beispiele, die zu einen kritischen Zustand führen, können Unebenheiten im Gelände, statische Hindernisse (bspw. Strommasten oder Wasserlöcher), schlechte Bedingungen des zu erntenden Guts (bspw. hohe Strohfeuchten) oder Erntegutstaus sein. Weitere Beispiele sind Unterbrechungen, Sandkuppen (bspw. erfassbar mittels unterdurchschnittlicher Strohfeuchten oder Stopps des Betriebs der landwirtschaftlichen Arbeitsmaschine.

Werden Messungen im kritischen Zustand ausgeführt, d.h. werden die Messpunkte im kritischen Zustand der landwirtschaftlichen Arbeitsmaschine angesteuert, kann es sein, dass das Ergebnis der Ansteuerung bzw. der Messung eine geringe Qualität aufweist. Ferner kann es sein, dass die landwirtschaftliche Arbeitsmaschine durch die Ansteuerung der Messpunkte in negativer Weise beeinflusst wird, weil die angesteuerten Messpunkte in den Randbereichen des Kennlinienfeldes und/oder außerhalb des aktiven Arbeitsbereiches des jeweiligen Kennlinienfeldes liegen. Beispielsweise könnte die Ansteuerung der Messpunkte zu einer geringen Menge von Erntegut führen, weil die landwirtschaftliche Arbeitsmaschine nicht im bestmöglichen Betriebspunkt operiert.

Befindet sich die landwirtschaftliche Arbeitsmaschine während der Optimierungsmethode bzw. während der Ansteuerung der Messpunkte im kritischen Zustand (oder wechselt die landwirtschaftliche Arbeitsmaschine in den kritischen Zustand), kann es sein, dass die Messpunkte unbrauchbar sind bzw. niedrige Qualität aufweisen und nicht weiterverwendet werden. Die Ansteuerung der Messpunkte wäre in diesem Fall unnötig gewesen.

Eine Aufgabe der vorliegenden Erfindung ist es daher, die Steuer- und Regeleinrichtung einer landwirtschaftlichen Arbeitsmaschine derart weiterzuentwickeln, dass eine qualitativ hochwertige Regelung der landwirtschaftlichen Arbeitsmaschine möglich wird.

Diese Aufgabe wird durch die hier offenbarten Ausführungsformen gelöst, die insbesondere durch den Gegenstand der unabhängigen Ansprüche definiert sind. Die abhängigen Ansprüche betreffen weitere Ausführungsformen. Verschiedene Aspekte und Ausführungsformen dieser Aspekte sind auch in der nachstehenden Zusammenfassung und Beschreibung offenbart, die zusätzliche Merkmale und Vorteile bieten.

Ein erster Aspekt bezieht sich auf eine landwirtschaftliche Arbeitsmaschine mit zumindest einer Steuer- und Regeleinrichtung, die mittels hinterlegter Kennlinienfelder zu einer automatisierbaren Einstellung und Überwachung von Arbeits- und/oder Qualitätsparametern der landwirtschaftlichen Arbeitsmaschine eingerichtet ist, die einen Ernteprozess beeinflussen, sowie mindestens einer Anzeigeeinrichtung zur Darstellung von Sollwerten und Istwerten der Arbeits- und/oder Qualitätsparameter. Dabei wird das hinterlegte Kennlinienfeld von Kennlinien gebildet. Die Kennlinien beschreiben in Abhängigkeit von Einflussgrößen verschiedene Bewertungsgrößen der landwirtschaftlichen Arbeitsmaschine. Dabei werden die Bewertungsgrößen von Qualitätsparametern und die Einflussgrößen von Arbeitsparametern gebildet. Das Kennlinienfeld umfasst in einem aktiven Arbeitsbereich liegende Betriebspunkte und in den Randbereichen und/oder außerhalb des aktiven Arbeitsbereiches liegende Messpunkte. Die landwirtschaftliche Arbeitsmaschine ist als Mähdrescher ausgeführt. Der aktive Arbeitsbereich ist der Bereich des Kennlinienfelds, in welchem die landwirtschaftliche Arbeitsmaschine im Arbeitseinsatz arbeitet. Es ist vorgesehen, dass die Steuer- und Regeleinrichtung im Ernteprozess die Betriebspunkte ermittelt und in das jeweilige Kennlinienfeld übernimmt. Der die Betriebspunkte umfassende Bereich des jeweiligen Kennlinienfeldes bildet den aktiven Arbeitsbereich des Kennlinienfeldes. Die Steuer- und Regeleinrichtung ist weiter eingerichtet, definiert Messpunkte in den hinterlegten Kennlinienfeldern anzusteuern. Dabei liegen diese gezielt angesteuerten Messpunkte in den Randbereichen des Kennlinienfeldes und/oder außerhalb des aktiven Arbeitsbereiches des jeweiligen Kennlinienfeldes. Die Messpunkte werden angesteuert, wenn sich die landwirtschaftliche Arbeitsmaschine in einem unkritischen Zustand befindet.

Mit anderen Worten kann eine derartige landwirtschaftliche Arbeitsmaschine ermöglichen, dass ein Messpunkt (oder mehrere Messpunkte) nur dann angesteuert wird, während sich die landwirtschaftliche Arbeitsmaschine in einem unkritischen Zustand befindet. Somit kann die Ansteuerung der Messpunkte ungestört durchgeführt werden. Die angesteuerten Messpunkte könnten ferner eine besonders hohe Qualität und einen geringen Messfehler aufweisen.

Der unkritische Zustand kann ein Betriebszustand bzw. Arbeitsstatus sein, in der die landwirtschaftliche Arbeitsmaschine ungestört eine Betriebsaufgabe (bspw. einen Ernteprozess) ausführt. Beispielsweise kann die landwirtschaftliche Arbeitsmaschine eine Betriebsaufgabe ausführen, ohne kritische Fehler zu melden und/oder auf unerwartete Probleme zu stoßen. Ein unkritischer Zustand kann weiterhin bedeuten, dass die landwirtschaftliche Arbeitsmaschine unter quasi-stationären Bedingungen arbeitet und durch keinerlei Hindernisse (bspw. einen Baum oder eine Senke) gestört wird. Der unkritische Zustand könnte als Zustand betrachtet werden, in dem die landwirtschaftliche Arbeitsmaschine reibungslos funktioniert und/oder keine unmittelbare Intervention erforderlich ist. Der unkritische Zustand könnte gegeben sein, solange die landwirtschaftliche Arbeitsmaschine effizient auf ihrer vordefinierten Arbeitsfläche (bspw. eine Fläche "Schlag ohne Baum") operiert und ihre Aufgabe erfüllt. Zusammenfassend könnte ein unkritischer Zustand beispielsweise der ungestörte Ernteprozess sein.

Ein Vorteil einer derartigen landwirtschaftlichen Arbeitsmaschine kann es sein, dass eine qualitativ hochwertige und robuste Regelung bereitgestellt werden kann. Des Weiteren kann die landwirtschaftliche Arbeitsmaschine den Vorteil haben, dass das hinterlegte Kennlinienfeld in dem gesamten hinterlegten Wertebereich ein gutes Arbeitsergebnis der landwirtschaftlichen Arbeitsmaschine, auch bei stark schwankenden Arbeitsbedingungen, ermöglicht.

Ein weiterer Vorteil kann eine effiziente Ansteuerung der Messpunkte sein. Die Ansteuerung muss dabei möglicherweise nicht unterbrochen werden, weil sich die landwirtschaftliche Arbeitsmaschine im unkritischen Zustand befindet. Somit kann ferner eine schnelle Ansteuerung der Messpunkte erfolgen. Ein weiterer Vorteil kann beispielsweise eine erheblich verbesserte Qualität der Messpunkte und/oder eines Kennlinienfelds (oder Modell eines Kennlinienfelds) sein. Insgesamt kann auch eine höhere Qualität und Effizienz des Ernteprozesses erwartet werden, weil die Ansteuerung der Messpunkte seltener durchgeführt werden muss.

Eine Ausführungsform des ersten Aspekts bezieht sich auf eine landwirtschaftliche Arbeitsmaschine, wobei der unkritische Zustand basierend auf einer digitalen Feldkarte ermittelt wird, wobei die digitale Feldkarte optional Hindernisbereich und einen unkritischen Bereich umfasst.

Mit anderen Worten kann die digitale Feldkarte einen Bereich für einen unkritischen Zustand und einen Bereich, der Hindernisse aufweist, umfassen. Die landwirtschaftliche Arbeitsmaschine kann auf die digitale Feldkarte zugreifen, um Informationen zu erhalten, ob der Bereich, in dem sich die landwirtschaftliche Arbeitsmaschine aktuell befindet, geeignet ist für die Ansteuerung der Messpunkte.

Bei der digitale Feldkarte kann es sich um eine Darstellung der Umgebung, insbesondere der Feldumgebung, handeln. Die digitale Feldkarte kann ein digitales Medium zur Darstellung der Erdoberfläche sein. Dabei kann die digitale Feldkarte ein eingeebnetes, verkleinertes und/oder generalisiertes, mit Beschreibungen und Zeichen versehenes Abbild der Erdoberfläche sein.

Die digitale Feldkarte kann computergestützt vorbereitet werden und daraufhin zur landwirtschaftlichen Arbeitsmaschine übermittelt werden. Genauso können Optimierungen an der digitalen Feldkarten am Computer vorgenommen werden. Der Fahrer bzw. Bediener kann die Optimierungen auch während der Fahrt im Fahrerassistenzsystem oder an einem mobilen Endgerät durchführen.

Die digitalen Feldkarte kann digitale Dokumente, Bilder und/oder Videos umfassen. Die digitale Feldkarte kann dabei auf einem computerlesbaren Medium bzw. einem Datenträger gespeichert vorliegen.

Die digitale Feldkarte kann verschiedene Bereiche, die die Umgebung abbilden, umfassen. Bei einem Bereich kann es sich um ein Gebiet von bestimmter Abgrenzung bzw. eine Fläche handeln. Bei dem unkritischen Bereich kann es sich um einen Bereich handeln, in dem sich die landwirtschaftliche Arbeitsmaschine im unkritischen Zustand befindet. Bei dem Hindernisbereich kann es sich um einen Bereich handeln, den die landwirtschaftliche Arbeitsmaschine vermeiden oder umfahren muss.

Beispiele für den Hindernisbereich können sich auf Teilbreiten und/oder Wendebereiche beziehen. Beispiele für den Bereich für den unkritischen Zustand können sich auf Flächen zum ungestörten Ernten beziehen.

Ein Vorteil der digitalen Feldkarte kann eine präzise Berechnung der Bahnlänge sein, die die landwirtschaftliche Arbeitsmaschine im unkritischen Zustand zurücklegen wird.

Eine Ausführungsform des ersten Aspekts bezieht sich auf eine landwirtschaftliche Arbeitsmaschine, wobei der unkritische Bereich und/oder der Hindernisbereich basierend auf zumindest einem der folgenden ermittelt wird:
einem Schlagbereich der landwirtschaftlichen Arbeitsmaschine;
einer Arbeitsrichtung der landwirtschaftlichen Arbeitsmaschine;
einem Wendebereich;
zumindest einem statischen Hindernis;
zumindest einer erfassten Teilbreite;
zumindest einem Feldeinschluss;
zumindest einem Lagergetreide;
einer Strohfeuchtigkeit;
einer mittels Satellitenbilder bestimmten Ertragsprognose; und/oder
einer Feldqualität, wobei die Feldqualität basierend auf Drohnenbildern und/oder Wachstumsmodelle ermittelt wird.

Bei der Feldqualität kann es sich um eine prognostizierte Feldqualität handeln, die z.B. per Fernerkundung ermittelt wird. Die Feldqualität kann auch auf Basis von Bildern ermittelt werden, wobei die Bilder vorangegangene Fahrspuren mittels Sensoren erfassen.

Eine Ausführungsform des ersten Aspekts bezieht sich auf eine landwirtschaftliche Arbeitsmaschine, wobei der unkritische Zustand einen unkritischen Zeitraum umfasst und wobei der unkritische Zeitraum basierend auf zumindest einem der folgenden ermittelt wird:
der digitalen Feldkarte; einer Fahrgeschwindigkeit der landwirtschaftlichen Arbeitsmaschine;
einer Arbeitsrichtung der landwirtschaftlichen Arbeitsmaschine.

Der unkritische Zeitraum kann eine Phase bzw. Zeitspanne sein, in der die landwirtschaftliche Arbeitsmaschine ungestört eine Betriebsaufgabe ausführt. Der unkritische Zeitraum kann eine Startzeit und eine Endzeit umfassen. Dabei kann sich die landwirtschaftliche Arbeitsmaschine von der Startzeit bis zur Endzeit die Betriebsaufgabe ausführen.

Mittels des unkritischen Zeitraums kann vorteilhafterweise erfasst werden, wie lange sich die landwirtschaftliche Arbeitsmaschine im unkritischen Zustand befindet. Dabei ist es möglich, dass der unkritische Zeitraum mittels der digitalen Feldkarte ermittelt wird. Beispielsweise kann anhand der digitalen Feldkarte ermittelt werden, wie lange die landwirtschaftliche Arbeitsmaschine im unkritischen Zustand befindet bzw. befinden wird. Somit kann eine Startzeit des unkritischen Zeitraums ermittelt werden, wobei zur Startzeit die Ansteuerung der Messpunkte beginnen kann. Weiterhin kann eine Endzeit des unkritischen Zeitraums ermittelt werden, wobei wobei zur Endzeit die Ansteuerung der Messpunkte beendet sein sollte. Demnach kann die Ansteuerung der Messpunkte während des unkritischen Zeitraums stattfinden.

Eine Ausführungsform des ersten Aspekts bezieht sich auf eine landwirtschaftliche Arbeitsmaschine, wobei die digitale Feldkarte mittels historischer Daten und/oder mittels aktueller Feldmessungen angepasst wird.

Die historischen Daten können Informationen und/oder Aufzeichnungen aus der Vergangenheit umfassen, die dazu verwendet werden können Schemata, Trends, Muster und Veränderungen im Verhalten der Umgebung bzw. Feldumgebung zu analysieren und zu verstehen. Die aktuellen Feldmessungen können Messungen der Umgebung bzw. Feldumgebung umfassen, die beispielsweise mittels eines Sensorsystems der landwirtschaftlichen Arbeitsmaschine während des Betriebs (bspw. während des Ernteprozesses) erfasst werden.

Vorteilhaftweise kann die digitale Feldkarte mittels historischer Daten und/oder mittels aktueller Feldmessungen verbessert werden, weil weitere Informationen in die digitale Feldkarte aufgenommen werden. Dabei kann die digitale Feldkarte mittels der aktuellen Feldmessungen stetig aktualisiert bzw. auf den neusten Stand gebracht werden.

Eine Ausführungsform des ersten Aspekts bezieht sich auf eine landwirtschaftliche Arbeitsmaschine, wobei der unkritische Zustand basierend auf zumindest einem der folgenden ermittelt wird und/oder wobei die digitale Feldkarte basierend auf zumindest einem der folgenden ermittelt wird:
einer Topologiekarte;
mittels On-Board Umfeldsensorik erfassten Daten;
auf den aktuellen Erntegegebenheiten basierenden Daten;
Satellitenbildern und/oder mittels Satellitenbilder bestimmten Ertragsprognosen; und/oder GPS Daten.

Mit anderen Worten kann der unkritische Zustand und/oder die digitale Feldkarte mittels einer Topologiekarte oder einer der vorangehend genannten Daten abgeleitet werden. Beispielsweise kann mittels computer-implementierten Verfahren und basierend auf der Topologiekarte erkannt werden, dass sich die landwirtschaftliche Arbeitsmaschine im unkritischen Zustand befindet. Die digitale Feldkarte kann ferner eine Topologiekarte und/oder weitere Daten (bspw. mittels On-Board Umfeldsensorik erfasste Daten oder auf den aktuellen Erntegegebenheiten basierenden Daten) umfassen.

Die Topologiekarte (auch topographische Karte) kann eine mittel- bis großmaßstäbige Karte sein, die zur genauen Abbildung der Geländeformen (Topografie) und anderer sichtbarer Details der Erdoberfläche dient. Das Gelände (bspw. eine Feldumgebung) wird in der Regel durch Höhenlinien dargestellt, ergänzt um markante Höhenpunkte (Gipfel, Sättel usw.) und den Verlauf der Gewässer sowie Straßen, Bahnlinien, größere Gebäude, die Umrisse von Ortschaften und andere technische Sachverhalte wie Zäune, Grenzen, Wasser- oder Stromleitungen.

On-Board Umfeldsensorik erfasste Daten kann sich auf Informationen beziehen, die von Sensoren gesammelt wurden, die direkt an Bord der landwirtschaftlichen Arbeitsmaschine angebracht sind, um die Umgebung zu überwachen. Satellitenbilder und/oder mittels Satellitenbilder bestimmte Ertragsprognosen können sich auf die Nutzung von Satellitenbildern zur Erfassung von Informationen über landwirtschaftliche Flächen beziehen, wie z.B. Bodenfeuchtigkeit, Vegetationsmuster oder Schädlingsbefall, um Ertragsprognosen zu erstellen. GPS-Daten können Informationen sein, die von GPS-Satellitensystemen erfasst und übertragen werden, um die genaue geografische Position eines Objekts oder einer Person zu bestimmen.

Zusammenfassend kann die digitale Feldkarte basierend auf Fernerkundung, wie z.B. Satellitendaten, oder historischen Daten, ermittelt werden. Alternativ kann die digitale Feldkarte basierend auf einer Ertragsprognose oder einer Änderung des prognostizierten Ertrages ermittelt werden.

Eine Ausführungsform des ersten Aspekts bezieht sich auf eine landwirtschaftliche Arbeitsmaschine, wobei ein Hinweis auf der Anzeigeeinrichtung einblendbar ist, wenn sich die landwirtschaftliche Arbeitsmaschine im unkritischen Zustand befindet.

Ein Vorteil dieser Ausführungsform kann es beispielsweise sein, dass der Bediener der landwirtschaftlichen Arbeitsmaschine mittels des Hinweises auf der Anzeigeeinrichtung schnell und präzise über den unkritischen Zustand unterrichtet wird. Des Weiteren kann der Bediener mittels des Hinweises informiert werden, dass die Messpunkte angesteuert werden.

Eine weitere Möglichkeit kann darin bestehen, dass ein weiterer Hinweis auf der Anzeigeeinrichtung einblendbar ist, wenn sich die landwirtschaftliche Arbeitsmaschine im kritischen Zustand befindet. Entsprechend kann der Bediener mittels des weiteren Hinweises informiert werden, dass die Messpunkte nicht angesteuert werden.

Eine Ausführungsform des ersten Aspekts bezieht sich auf eine landwirtschaftliche Arbeitsmaschine, wobei die Arbeitsparameter die Parameter "Maschinenparametereinstellung" und "Erntegutparameter" umfassen; und/oder
wobei die Qualitätsparameter die Parameter "Abscheideverlust", "Reinigungsverlust", "Überkehr", "Überkehrvolumen" und/oder "Kornanteil in der Überkehr" umfassen. Die Qualitätsparameter können auch die Parameter "Körnerbruch", "Verunreinigung" oder "Ausdruschverlust" umfassen.

Ein zweiter Aspekt bezieht sich auf einen landwirtschaftlichen Verbund umfassend eine Vielzahl von landwirtschaftlichen Arbeitsmaschinen, wobei die landwirtschaftlichen Arbeitsmaschinen einer gemeinsamen digitalen Feldkarte zugewiesen sind.

Mit anderen Worten können eine Vielzahl von landwirtschaftlichen Arbeitsmaschinen auf eine digitale Feldkarte gemeinsam zugreifen und somit Informationen mit der digitalen Feldkarte austauschen. Dies kann es ermöglichen, dass für jede der landwirtschaftlichen Arbeitsmaschinen ein unkritischer Zustand ermittelt wird, wobei die unkritischen Zustände aufeinander abgestimmt sein können.

Für den Fachmann ist ersichtlich, dass die vorgestellten Verfahren in Form von Anweisungen in Software oder auf einem Computerprogrammprodukt implementiert oder gespeichert sein können, wobei gespeicherte Anweisungen es ermöglichen, die Schritte nach dem Verfahren auszuführen, wenn eine entsprechende datenverarbeitende Maschine durch die Software gesteuert wird. Mit anderen Worten ist es möglich, dass es sich bei den Verfahren um computer-implementierte Verfahren handelt. Ausführungsformen beziehen sich daher auch auf ein Speichermedium mit darauf gespeicherter Software, die ausgebildet ist, um die vorgestellten Verfahren durchzuführen, wenn die Software auf einer datenverarbeitenden Einrichtung ausgeführt wird.

Weitere Vorteile und Merkmale ergeben sich aus den folgenden Ausführungsformen, die sich zum Teil auf die Figuren beziehen. Die Figuren zeigen die Ausführungsformen nicht immer maßstabsgetreu. Die Abmessungen der verschiedenen Merkmale können insbesondere zur Klarheit der Beschreibung entsprechend vergrößert oder verkleinert sein. Hierzu sind die Figuren zumindest teilweise schematisiert.

Es zeigen:
- Fig. 1: eine schematische Darstellung einer als Mähdrescher ausgeführten landwirtschaftlichen Arbeitsmaschine gemäß einer Ausführungsform;
- Fig. 2: eine schematische Darstellung einer Anzeigestruktur einer Steuer- und Regelungseinrichtung gemäß einer Ausführungsform;
- Fig. 3a - 3d: schematische Darstellungen der Anzeigestruktur der Steuer- und Regelungseinrichtung in unterschiedlichen Betriebssituationen gemäß einer Ausführungsform;
- Fig. 4: schematische Darstellung einer digitalen Feldkarte gemäß einer Ausführungsform;
- Fig. 5: schematische Darstellung der digitalen Feldkarte, umfassend Hindernisbereich und einen unkritischen Bereich, gemäß einer Ausführungsform;

In der folgenden Beschreibung wird auf die beigefügten Figuren verwiesen, die Teil der Erfindung sind und bestimmte Aspekte und Ausführungsformen veranschaulichen, unter denen die vorliegende Erfindung verstanden werden kann. Gleiche Bezugszeichen beziehen sich auf gleiche oder zumindest funktionell oder strukturell ähnliche Merkmale.

Im Allgemeinen gilt ein beschriebenes Verfahren auch für eine entsprechende Vorrichtung zur Durchführung des Verfahrens oder ein entsprechendes System, das ein oder mehrere Vorrichtungen umfasst, und umgekehrt. Wird beispielsweise ein bestimmter Verfahrensschritt beschrieben, so kann eine entsprechende Vorrichtung ein Merkmal zur Durchführung des beschriebenen Verfahrensschrittes enthalten, auch wenn dieses Merkmal in der Abbildung nicht ausdrücklich beschrieben oder dargestellt ist. Wird dagegen beispielsweise ein bestimmtes Gerät auf der Grundlage von Funktionseinheiten beschrieben, kann ein entsprechendes Verfahren einen oder mehrere Schritte zur Durchführung der beschriebenen Funktionalität enthalten, auch wenn diese Schritte in den Abbildungen nicht explizit beschrieben oder dargestellt sind. Ähnlicherweise kann ein System entsprechende Vorrichtungsmerkmal oder Merkmale zur Durchführung eines bestimmten Verfahrensschritts umfassen. Die Merkmale der verschiedenen oben oder unten beschriebenen beispielhaften Aspekte und Ausführungsformen können kombiniert werden, sofern nicht ausdrücklich etwas anderes angegeben ist.

Einzelheiten bezüglich einer landwirtschaftlichen Arbeitsmaschine 1 sind detailliert in der DE 10 2013 106 128 A1 beschrieben, deren Inhalt hiermit vollumfänglich Bestandteil der Offenbarung dieser Patentanmeldung wird.

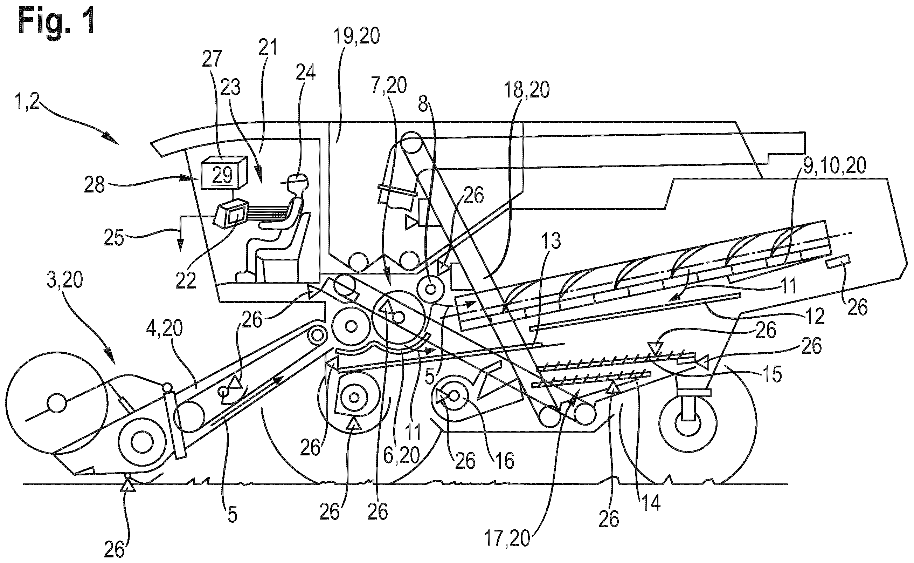

Die in Fig. 1 schematisch dargestellte, als Mähdrescher 2 ausgeführte landwirtschaftliche Arbeitsmaschine 1 nimmt in ihrem frontseitigen Bereich ein Getreideschneidwerk 3 auf, welches in an sich bekannter Weise mit dem Schrägförderer 4 des Mähdreschers 2 verbunden ist. Der den Schrägförderer 4 durchlaufende Erntegutstrom 5 wird in dem obenseitigen, rückwärtigen Bereich des Schrägförderers 4 an die untenseitig zumindest teilweise von einem sogenannten Dreschkorb 6 ummantelten Dreschorgane 7 des Mähdreschers 2 übergeben. Eine den Dreschorganen 7 nachgeordnete Umlenktrommel 8 lenkt den im rückwärtigen Bereich der Dreschorgane 7 aus diesen austretenden Gutstrom 5 so um, dass er unmittelbar an eine als Trennrotor 9 ausgeführte Trenneinrichtung 10 übergeben wird. In dem rotierenden Trennrotor 9 wird der Gutstrom 5 so gefördert, dass in dem Gutstrom 5 enthaltene freibewegliche Körner 11 im untenseitigen Bereich des Trennrotors 9 abgeschieden werden. Es liegt im Rahmen der Erfindung, dass die im dargestellten Ausführungsbeispiel als Trennrotor 9 ausgeführte Trenneinrichtung 10 auch als an sich bekannter und daher nicht dargestellter Hordenschüttler ausgeführt sein kann. Sowohl die am Dreschkorb 6 als auch am Trennrotor 9 abgeschiedenen Körner 11 werden über Rücklaufboden 12 und Zuführboden 13 einer aus mehreren Siebebenen 14, 15 und einem Gebläse 16 bestehenden Reinigungseinrichtung 17 zugeführt. Der gereinigte Körnerstrom wird schließlich mittels Elevatoren 18 an einen Korntank 19 übergeben. Im Folgenden werden das Getreideschneidwerk 3, der Schrägförderer 4, die Dreschorgane 7 und der ihnen zugeordnete Dreschkorb 6, die Trenneinrichtung 10, die Reinigungseinrichtung 17, die Elevatoren 18 und der Korntank 19 als Arbeitsorgane 20 der landwirtschaftlichen Arbeitsmaschine 1 bezeichnet.

Weiter verfügt die landwirtschaftliche Arbeitsmaschine 1 über eine Fahrzeugkabine 21 in der zumindest eine mit einer Anzeigeeinheit 22 versehene Steuer- und Regeleinrichtung 23 angeordnet ist, mittels derer automatisch oder vom Bediener 24 der landwirtschaftlichen Arbeitsmaschine 1 initiiert eine Vielzahl von an sich bekannten und daher nicht näher erläuterten Prozessen gesteuert werden können. Die Steuer- und Regeleinrichtung 23 kommuniziert über ein sogenanntes Bussystem 25 in an sich bekannter Weise mit einer Vielzahl von Sensorsystemen 26. Einzelheiten bezüglich der Struktur der Sensorsysteme 26 sind detailliert in der DE 101 47 733 beschrieben, deren Inhalt hiermit vollumfänglich Bestandteil der Offenbarung dieser Patentanmeldung wird, sodass im Folgenden die Struktur der Sensorsysteme 26 nicht nochmals beschrieben wird. Zudem ist die Steuer- und Regeleinrichtung 23 mit einem eine Anzeigeeinheit 27 umfassenden Fahrerassistenzsystem 28 gekoppelt. Es liegt im Rahmen der Erfindung, dass das Fahrerassistenzsystem 28 auch unmittelbar in die Steuer- und Regeleinrichtung 23 integriert sein kann und die Visualisierung der von dem Fahrerassistenzsystem 28 bereitgestellten und nachfolgend noch näher erläuterten Informationen 29 auch unmittelbar in dem der Steuer- und Regeleinrichtung 23 zugeordneten Anzeigeeinheit 22 erfolgt.

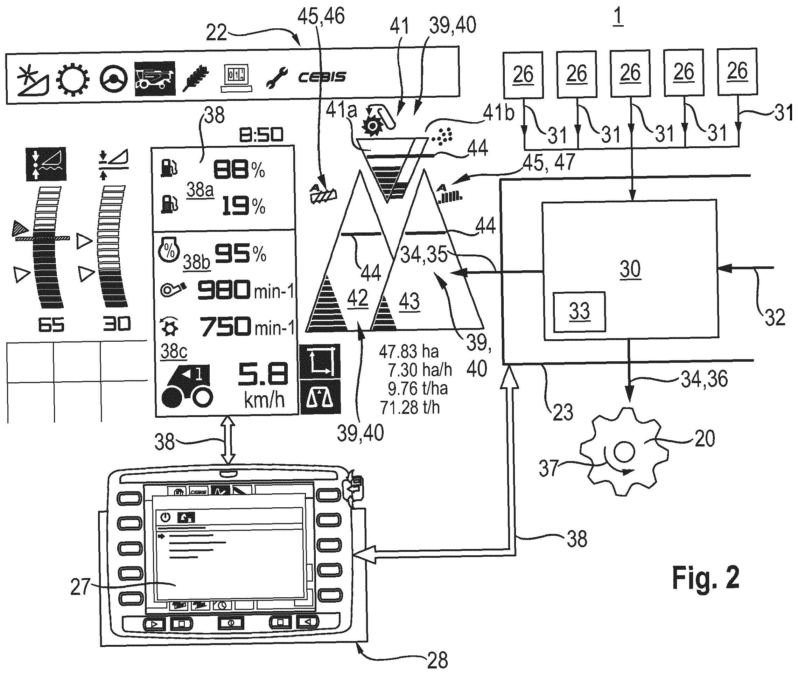

Fig. 2 zeigt eine schematische Darstellung der Anzeigeeinheit 22 der Steuer- und Regeleinrichtung 23 sowie die der Steuer- und Regeleinrichtung 23 zugeordnete und mit der Anzeigeeinheit 22 gekoppelte Recheneinheit 30. Die Recheneinheit 30 ist so beschaffen, dass sie neben den von den Sensorsystemen 26 generierten internen Informationen 31, externe Informationen 32 und in der Recheneinheit 30 selbst hinterlegte Informationen 33, wie etwa Expertenwissen, zu einer Vielzahl von Ausgangssignalen 34 verarbeiten kann. Die Ausgangssignale 34 sind dabei so beschaffen, dass sie zumindest Anzeigesteuersignale 35 und Arbeitsorgansteuersignale 36 umfassen, wobei erstere die Inhalte der Anzeigeeinheit 22 bestimmen und letztere die Änderung der unterschiedlichsten Arbeitsparameter 37 der Arbeitsorgane 20 der landwirtschaftlichen Arbeitsmaschine 1 bewirken, wobei Pfeil 37 symbolisch für die Dreschtrommeldrehzahl steht. Zudem ist die Steuer- und Regeleinrichtung 23, wie bereits beschrieben, mit einem Fahrerassistenzsystem 28 gekoppelt, wobei das Fahrerassistenzsystem 28 so in die landwirtschaftliche Arbeitsmaschine 1 integriert ist, dass es Daten 38 in noch näher zu beschreibender Weise sowohl mit der Steuer- und Regeleinrichtung 23 als auch mit der dieser zugeordneten Anzeigeeinheit 22 austauschen kann. Die in Figur 2 dargestellten Inhalte der Anzeigeeinheiten 22, 27 sind beispielhaft und werden nachfolgend näher beschrieben. Die der Steuer- und Regeleinrichtung 23 zugeordnete Anzeigeeinheit 22 umfasst in ihrem zentralen Bereich ein vom Bediener 24 frei definierbares sogenanntes Hotkey-Fenster 38 in welchem wichtige Maschineninformationen, wie etwa der Füllstand des Kraftstofftanks 38a, Maschinenparametereinstellungen 38b und die Fahrgeschwindigkeit 38c visualisiert sind.

Erfindungsgemäß umfasst die Anzeigeeinheit 22 in ihrem rechtsseitigen Bereich Anzeigeelemente 39 zur Visualisierung aktueller Werte bestimmter Qualitätsparameter 40 der landwirtschaftlichen Arbeitsmaschine 1. Im dargestellten Ausführungsbeispiel visualisiert das obenseitig angeordnete Anzeigeelement 39 die Zusammensetzung der sogenannten "Überkehr" 41, wobei die linkseitige Darstellung das "Überkehrvolumen" 41a und die rechtsseitige Darstellung den "Kornanteil in der Überkehr" 41b visualisiert. Das untere, linke Anzeigeelement 39 visualisiert die sogenannten "Abscheideverluste" 42, d.h. diejenigen Kornverluste, die von der als Trennrotor 9 oder Hordenschüttler ausgeführten Trenneinrichtung 10 im rückwärtigen Bereich der landwirtschaftlichen Arbeitsmaschine 1 aus dieser ausgetragen und nicht in den Korntank 19 gefördert werden. Das untere, rechte Anzeigeelement 39 visualisiert die sogenannten "Reinigungsverluste" 43, wobei hier diejenigen Kornverluste angezeigt werden, die von der Reinigungseinrichtung 17 in analoger Weise zur Trenneinrichtung 10 aus der landwirtschaftlichen Arbeitsmaschine 1 ausgetragen und nicht in den Korntank 19 gefördert werden. Jedes der Anzeigeelemente 39 umfasst zudem einen als waagerechten Strich ausgeführten Sollwertanzeiger 44, der das maximal zulässige und vom Bediener 24 zuvor definierte Verlustniveau des jeweiligen Qualitätsparameters 40 definiert, sodass der Bediener 24 schnell erfassen kann, ob die landwirtschaftliche Arbeitsmaschine 1 eine hinreichende Arbeitsqualität aufweist.

Aufgrund der komplexen Zusammenhänge zwischen verschiedensten Maschinenparametern 38a-c und zumindest den Qualitätsparametern 40 sind die Einstelloptionen für die Trenneinrichtung 10 und die Reinigungseinrichtung 17 in sogenannten Einstellautomaten 45 hinterlegt. Im dargestellten Ausführungsbeispiel sind gemäß Figur 2 ein Abscheideautomat 46 für die Optimierung der Arbeitsweise der Trenneinrichtung 10 und ein Reinigungsautomat 47 für die Optimierung der Arbeitsweise der Reinigungseinrichtung 17 programmiert und in der Steuer- und Auswerteinrichtung 23 hinterlegt. Es liegt im Rahmen der Erfindung, dass jeder der verfügbaren Einstellautomaten 45 auch ganz oder teilweise in dem Fahrerassistenzsystem 28 hinterlegt sein kann.

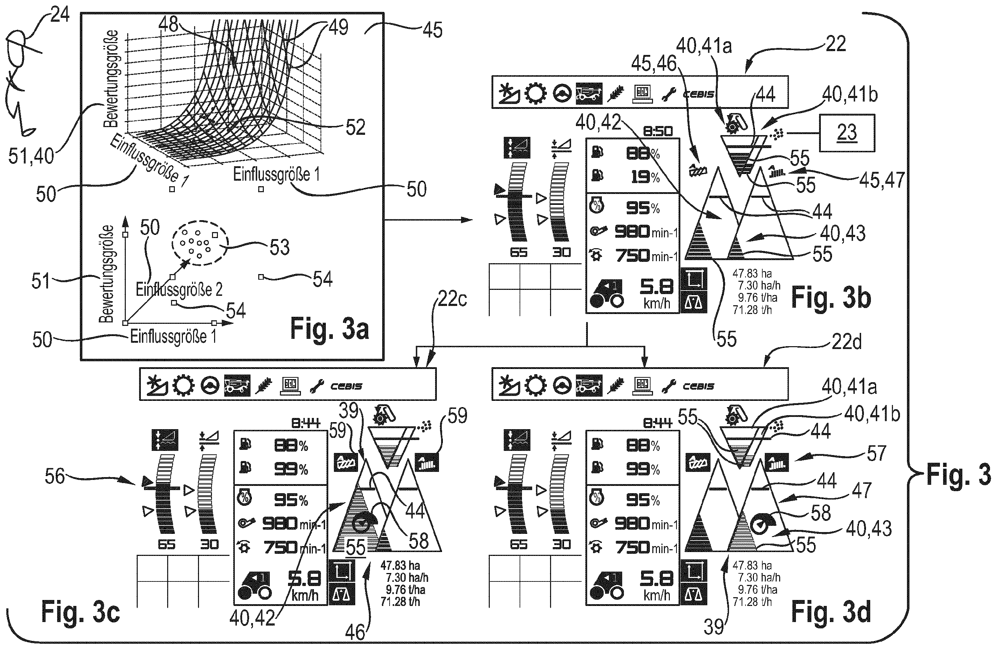

Fig. 3 beschreibt nun die Erfindung anhand schematischer Abbildungen der der Steuer- und Regeleinrichtung 23 zugeordneten Anzeigeeinheit 22 sowie der verfügbaren Einstellautomaten 45 näher. Fig. 3a zeigt zum besseren Verständnis der Wirkungsweise der verfügbaren Einstellautomaten 45 eine schematische Struktur derselben. Sowohl der Abscheideautomat 46 als auch der Reinigungsautomat 47, wie im Übrigen jeder für die Einstellung von Arbeitsorganen 20 der landwirtschaftlichen Arbeitsmaschine 1 vorgesehene Einstellautomat 45, werden durch Kennlinienfelder 48 definiert. Die ein Kennlinienfeld 48 bildenden Kennlinien 49 beschreiben in Abhängigkeit von Einflussgrößen 50 verschiedene Bewertungsgrößen 51 der landwirtschaftlichen Arbeitsmaschine 1. Im vorliegenden Fall bildet die Bewertungsgröße 51 die zuvor beschriebenen Qualitätsparameter 40. Die Einflussgrößen 50 umfassen im dargestellten Ausführungsbeispiel zumindest die Drehzahl einer als Trennrotor 9 ausgeführten Trenneinrichtung 10 sowie die Drehzahl des der Reinigungseinrichtung 17 zugeordneten Gebläses 16 und die Öffnungsweite der Siebebenen 14, 15. Während des Arbeitseinsatzes der landwirtschaftlichen Arbeitsmaschine 1, hier der Ernteeinsatz des Mähdreschers 2, werden die ermittelten Betriebspunkte 52 unmittelbar in das Kennlinienfeld 48 übernommen. Gemäß der unteren Darstellung in Fig. 3a arbeitet die landwirtschaftliche Arbeitsmaschine 1 häufig nur in einem kleinen Bereich 53 des jeweils hinterlegten Kennlinienfeldes 48. Damit das in der Steuer- und Regeleinrichtung 23 hinterlegte Kennlinienfeld 48 den jeweils zu modellierenden Abscheide- oder Reinigungsprozess im gesamten vordefinierten Wertebereich gut wiedergibt werden in regelmäßigen Abständen Messpunkte 54 angefahren, die nicht in dem gegenwärtig durchlaufenen Bereich 53 des jeweiligen Kennlinienfeldes 48 und/oder in seinen Grenzbereichen liegen. Dies hat den Effekt, dass die in den Einstellautomaten 45 hinterlegten Abscheide- oder Reinigungsmodelle auch im Grenzbereich der Kennlinienfelder 48 und in zurzeit nicht durchlaufenen Bereichen des jeweiligen Kennlinienfeldes 48 den jeweiligen Prozess hinreichend genau abbilden.

Wird die landwirtschaftliche Arbeitsmaschine 1, im hier dargestellten Ausführungsbeispiel der Mähdrescher 2, mit aktiviertem Abscheideautomat 46 und aktiviertem Reinigungsautomat 47 betrieben, hat die der Steuer- und Regeleinrichtung 23 zugeordnete Anzeigeeinheit 22 die in Fig. 3b gezeigte und zuvor beschriebene Struktur. Der Wert jedes Qualitätsparameters 40, hier das "Überkehrvolumen" 41a, der "Kornanteil in der Überkehr" 41b, der "Abscheideverlust" 42 und, der "Reinigungsverlust" 43, wird qualitativ in Form farblich hervorgehobener Flächen 55 visualisiert. Jede der Flächen 55 ändert ihre Ausdehnung in Abhängigkeit von den durch die Steuer- und Regeleinrichtung 23 ermittelten Werten für "Abscheideverlust" 42, "Kornverlust" 43 und "Überkehrzusammensetzung" 41a, 41b, wobei es Aufgabe der Einstellautomaten 45 ist, die Qualitätskriterien 40 in einem Optimum und unterhalb des jeweiligen Sollwertanzeigers 44 zu halten.

Muss nun ein definierter Messpunkt 54 durch die Einstellautomaten 45 angefahren werden, ergeben sich für das hier beschriebene Ausführungsbeispiel gemäß den Figuren 3c und 3d zwei Aktivierungszustände 56, 57. In dem einen Aktivierungszustand 56, Fig. 3c, fährt der Abscheideautomat 46 automatisch einen Messpunkt 54 an, der entweder außerhalb des gerade durchlaufenen Bereichs 53 oder im Grenzbereich des die Kornabscheidung an der Trenneinrichtung 10 beschreibenden Kennlinienfeldes 48 liegt. Damit der Bediener 24 der landwirtschaftlichen Arbeitsmaschine 1 darüber informiert ist, dass der Abscheideautomat 46 einen nicht im gegenwärtigen Arbeitsbereich 53 liegenden Messpunkt 54 anfährt, wird in der Anzeigeeinheit 22c die den Qualitätsparameter 40 "Abscheideverlust" 42 visualisierende Fläche 55 verblassend dargestellt. Zudem kann vorgesehen sein, dass die verblassend dargestellt Fläche 55 in ihrer Größe entweder eingefroren wird oder weiterhin die Änderung der "Abscheideverluste" 42 visualisiert. Letztere Variante hält den Bediener 24 über den Verlauf die Änderung informiert, was vor Erreichen eines eingeschwungenen Zustandes auch dazu führen kann, dass die "Abscheideverluste" 42 auch kurzzeitig die Marke des Sollwertanzeigers 44 überschreiten. Um die Optimierung eines nicht im gegenwärtigen Arbeitsbereich 53 liegenden Messpunktes 54 gut erkennbar für den Bediener 24 zu signalisieren ist erfindungsgemäß vorgesehen, dass das den "Abscheideverlust" 42 visualisierende Anzeigeelement 39 durch ein charakteristisches Symbol 58 zumindest partiell überblendet wird, während der partiell überblendete Arbeits- und/oder Qualitätsparameter 37, 40 passiv, vorzugsweise verblassend, dargestellt wird.

In analoger Weise kann die Struktur der Anzeigeeinheit 22 in dem weiteren Aktivierungszustand 57 gemäß Fig. 3d angepasst werden. In diesem Fall fährt der Reinigungsautomat 47 automatisch einen Messpunkt 54 an, der entweder außerhalb des gerade durchlaufenen Bereichs 53 oder im Grenzbereich des die Kornabscheidung an der Reinigungseinrichtung 17 beschreibenden Kennlinienfeldes 48 liegt. Damit der Bediener 24 der landwirtschaftlichen Arbeitsmaschine 1 darüber informiert ist, dass der Reinigungsautomat 47 einen nicht im gegenwärtigen Arbeitsbereich 53 liegenden Messpunkt 54 anfährt, werden in der Anzeigeeinheit 22d die die Qualitätsparameter 40 "Reinigungsverlust" 43, "Überkehrvolumen" 41a, "Kornanteil in der Überkehr" 41b, visualisierenden Flächen 55 verblassend dargestellt. Zudem kann vorgesehen sein, dass die verblassend dargestellten Flächen 55 in ihrer Größe entweder eingefroren werden oder weiterhin die Änderung der "Reinigungsverluste" 43, des "Überkehrvolumens" 41a und des "Kornanteils in der Überkehr" 41b visualisieren. Letztere Variante hält den Bediener 24 über den Verlauf die Änderungen informiert, was vor Erreichen eines eingeschwungenen Zustandes ebenfalls dazu führen kann, dass die "Reinigungsverluste" 43, das "Überkehrvolumen" 41a und der "Kornanteil in der Überkehr" 41b kurzzeitig die Marke der jeweiligen Sollwertanzeiger 44 überschreiten. Um die Optimierung eines nicht im gegenwärtigen Arbeitsbereich 53 liegenden Messpunktes 54 gut erkennbar für den Bediener 24 zu signalisieren ist auch hier erfindungsgemäß vorgesehen, dass zumindest das den "Reinigungsverlust" 43 visualisierende Anzeigeelement 39 durch ein charakteristisches Symbol 58 zumindest partiell überblendet wird, während der partiell überblendete Arbeits- und/oder Qualitätsparameter 37, 40 passiv, vorzugsweise verblassend, dargestellt wird.

In an sich bekannter Weise kann jeder der vorhandenen Einstellautomaten 45 voneinander unabhängig automatisch oder vom Bediener 24 ausgelöst aktiviert und deaktiviert werden, sodass die Anzahl der gleichzeitig arbeitenden Einstellautomaten 45 beliebig wählbar ist. Vorzugsweise sind stets alle Einstellautomaten 45 zur Optimierung der Arbeitsweise der landwirtschaftlichen Arbeitsmaschine 1 aktiviert. Es liegt im Rahmen der Erfindung, dass eine gezielte Abschaltung eines Einstellautomaten 45 auch dadurch bewirkt werden kann, dass der Bediener 24 gezielt einen Arbeitsparameter 37 durch Eingabe eines definierten Wertes ändert. Findet die Übersteuerung durch den Bediener 24 während des gezielten Anfahrens von Messpunkten 54 statt, werden die charakteristischen Symbole 58 ausgeblendet und die gegebenenfalls verblassende Darstellung der Arbeits- und/oder Qualitätsparameter 37, 40 aufgehoben. In diesem Zusammenhang kann zudem vorgesehen sein, dass der Bediener 24 in der Anzeigeeinheit 22 einen expliziten Hinweis auf die Deaktivierung von Einstellautomaten 45 erhält.

Da die Steuer- und Regeleinrichtung 23 in an sich bekannter Weise so beschaffen ist, dass sie stets die Änderung der Qualitätsparameter 40 visualisiert, unabhängig davon, ob Einstellautomaten 45 aktiviert sind oder nicht kann in einer weiteren Ausgestaltung der Erfindung vorgesehen sein, dass in der Anzeigeeinheit 22 die Einstellautomaten 45 repräsentierende Piktogramme 59 positioniert sind, die bei aktivem Einstellautomat 45 zumindest farblich hervorgehoben visualisiert werden. Die Deaktivierung des jeweiligen Einstellautomaten 45 wird entsprechend durch Abblendung des jeweiligen Piktogramms 59 visualisiert.

Weiter liegt es im Rahmen der Erfindung, dass jeder Einstellautomat 45 über sein eigenes Kennlinienfeld 48 verfügt, wobei einzelne Einstellautomaten 45, auch unter Einbeziehung einer Vielzahl von Kennlinienfeldern 48 eine Optimierung der Arbeitsweise der landwirtschaftlichen Arbeitsmaschine 1 bewirken können. Im dargestellten Ausführungsbeispiel berücksichtigt der Reinigungsautomat 47 Kennlinienfelder 48, die sowohl die "Reinigunsgverluste" 43 als auch das "Überkehrvolumen" 41a und den "Kornanteil in der Überkehr" 41b berücksichtigen. Damit die berücksichtigten Kennlinienfelder 48 auch bei schwankenden Einflussgrößen 50 brauchbare Werte für die Bewertungsgrößen 51 und damit für eine optimale Arbeitsweise der landwirtschaftlichen Arbeitsmaschine 1 liefern, ist vorgesehen, dass das Anfahren nicht im gegenwärtigen Arbeitsbereich 53 oder in den Grenzbereichen der Kennlinienfelder 48 liegender Messpunkte 54 in definierten zeitlichen Abständen und auf eine bestimmte Anzahl von Messpunkten 54 beschränkt erfolgt. Vorzugsweise ist die Anzahl der gezielt ansteuerbaren Messpunkte 54 auf vier beschränkt.

Zudem kann vorgesehen sein, dass die Steuer- und Regeleinrichtung 23 und damit auch die Einstellautomaten 45 automatisch mit Inbetriebnahme der landwirtschaftlichen Arbeitsmaschine 1 aktiviert werden. In diesem Zusammenhang kann zudem vorgesehen sein, dass bei inaktiven Einstellautomaten 45 ein Hinweis auf eine Effizienzsteigerung durch Aktivierung des jeweiligen Einstellautomaten 45 an den Bediener 24 generierbar ist.

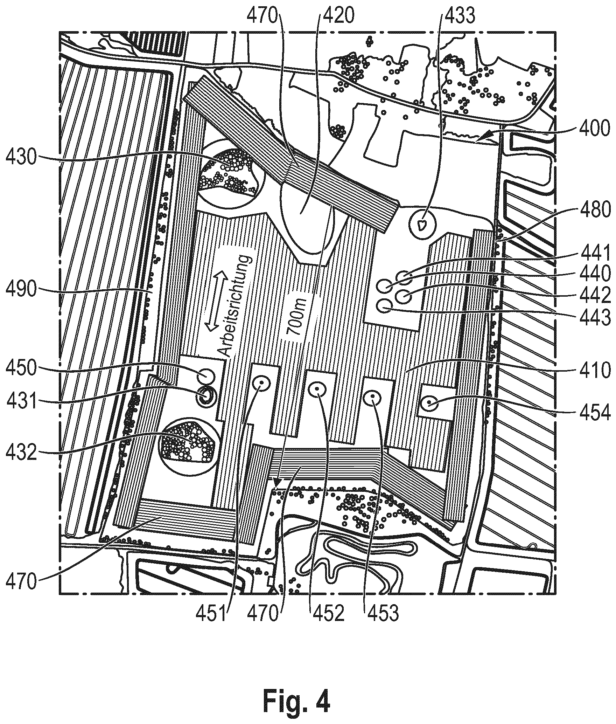

Fig. 4 zeigt eine schematische Darstellung der digitalen Feldkarte 400 gemäß einer Ausführungsform. Die landwirtschaftliche Arbeitsmaschine 1 kann auf die digitale Feldkarte 400 zugreifen, um Informationen zu erhalten, ob der Bereich, in dem sich die landwirtschaftliche Arbeitsmaschine 1 aktuell befindet, geeignet ist zur Durchführung einer Optimierungsmethode bzw. zur Ansteuerung der Messpunkte 54.

Die digitale Feldkarte 400 umfasst verschiedene Objekte und Flächen eines Feldes bzw. einer Feldumgebung. Die digitale Feldkarte 400 umfasst beispielsweise einen Arbeitsfläche 410, die eine Fläche darstellt, auf der die landwirtschaftliche Arbeitsmaschine 1 ungestört eine Betriebsaufgabe ausführen kann. Beispielsweise könnte die landwirtschaftliche Arbeitsmaschine 1 auf der Arbeitsfläche 410 einen Ernteprozess durchführen.

Ferner umfasst die digitale Feldkarte 400 eine Vielzahl von Hindernissen, d.h. Objekte, die von der landwirtschaftlichen Arbeitsmaschine 1 vermieden bzw. umfahren werden müssen. Beispielsweise umfasst die digitale Feldkarte 400 eine Fläche 420 mit einer überdurchschnittlich hohen Strohfeuchtigkeit. Ferner weist die digitale Feldkarte 400 mehrere Feldeinschlüsse 430, 431, 432 und 433 auf. Weiterhin umfasst die Feldkarte 400 mehrere Stellen 440, 441, 442 und 443, an denen Lagergetreide positioniert ist, und mehrere statische Hindernisse 450, 451, 452, 453 und 454, d.h. beispielsweise Bäume oder Sträucher, denen die landwirtschaftliche Arbeitsmaschine 1 ausweichen muss.

Die digitale Feldkarte 400 umfasst des Weiteren Flächen, auf denen ein Ansteuern von Messpunkten zu schlechten Ergebnissen führe könnte. Dazu zählen beispielsweise Teilbreiten 460 und Wendebereich 470.

Bei einer Teilbreite 460 kann es sich um den randlichen Bereich eines Feldes handeln, der nicht oder nur teilweise bearbeitet werden kann, weil die Arbeitsbreite der landwirtschaftlichen Arbeitsmaschine 1 breiter ist als der zur Verfügung stehende randliche Bereich des Feldes. Bei einem Wendebereich 470 kann es sich um den randlichen Bereich eines Feldes handeln, auf dem die landwirtschaftliche Arbeitsmaschine 1 gewendet werden kann.

Üblicherweise wird das zu bearbeitende Feld durch einen Zaun 480 und/oder eine Feldgrenzen 490 begrenzt. Dabei können Feldgrenzen digital festgelegt werden, z.B.. Durch den Landwirt oder durch das Freischneiden. Zu Beginn kann das Vorgewende (d.h. der Wendebereich) freigeschnitten werden, wobei die Feldgrenzen abgefahren werden können. Die Feldgrenzen können bei der Aussaat festgelegt werden. Natürliche Hindernisse (umgekippter Baum, Bodenerosion, usw.) aber auch menschengemachte Einflüsse (bspw. Bodenarbeiten) können Veränderungen während der Wachstumsperiode bewirken.

Die landwirtschaftliche Arbeitsmaschine 1 bewegt sich beim Ernteprozess üblicherweise in eine Arbeitsrichtung. Alle Hindernisse müssen typischerweise von der landwirtschaftlichen Arbeitsmaschine 1 umfahren werden bzw. in diesen Bereich kann die landwirtschaftliche Arbeitsmaschine 1 nicht oder nur eingeschränkt ernten.

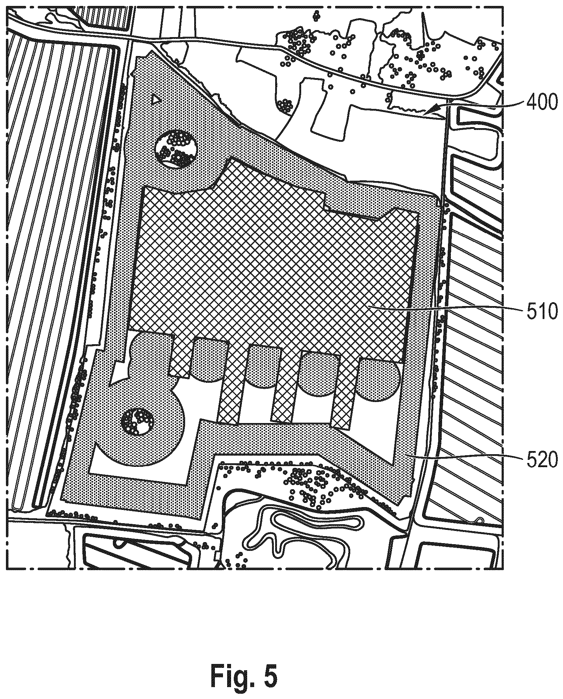

Fig. 5 zeigt eine schematische Darstellung der digitalen Feldkarte 400, umfassend einen Hindernisbereich 520 und einen unkritischen Bereich 510, gemäß einer Ausführungsform.

Dabei wurde die in Fig. 4 dargestellte digitale Feldkarte 400 einem Verarbeitungsschritt unterzogen, so dass die digitale Feldkarte 400 zwei Bereiche abbildet, nämlich den Hindernisbereich 520 und den unkritischen Bereich 510.

Bei dem Verarbeitungsschritt wurde der Hindernisbereich 520 ermittelt, indem basierend auf der Vielzahl von Hindernissen (bspw. den statischen Hindernissen 450, 451, 452, 453 und 454) eine zusammenhängende Fläche erzeugt wurde. Mit anderen Worten wurde der Hindernisbereich 520 mittels aller zuvor genannten Hindernisse ermittelt, d.h. beispielsweise basierend auf zumindest einem Feldeinschluss 430, 431, 432 und 433, zumindest einem statischen Hindernis 450, 451, 452, 453 und 454, zumindest einer erfassten Teilbreiten 460, einem Wendebereich 470, zumindest einem Lagergetreide und/oder einer Strohfeuchtigkeit.

Ferner ist es auch möglich, dass weitere Daten zur Bestimmung des Hindernisbereichs 520 herangezogen werden, bspw. mittels Satellitenbilder bestimmten Ertragsprognosen und/oder einer Feldqualität, wobei die Feldqualität basierend auf Drohnenbildern und/oder Wachstumsmodelle ermittelt wird.

Bei dem Verarbeitungsschritt wurde ferner ein unkritischer Bereich 510 ermittelt. Auf Basis des unkritischen Bereichs 510 kann bestimmt werden, wann und wie lange sich die landwirtschaftliche Arbeitsmaschine 1 im unkritischen Zustand befinden kann. Im unkritischen Bereich 510 kann die landwirtschaftliche Arbeitsmaschine 1 unter quasi-stationären Bedingungen arbeiten und wird möglicherweise durch keinerlei Hindernisse (bspw. einen Baum) gestört. Somit ist es möglich, dass die Ansteuerung der Messpunkte 54 besser geplant werden kann.

Beispielsweise kann basierend auf der digitalen Feldkarte 400 ermittelt werden, dass sich die landwirtschaftliche Arbeitsmaschine 1 im unkritischen Zustand befindet, wobei der unkritische Zustand einen unkritischen Zeitraum umfasst. Der unkritische Zeitraum kann mittels der digitalen Feldkarte 400 ermittelt werden, nämlich indem mittels der Fahrgeschwindigkeit der landwirtschaftlichen Arbeitsmaschine 1 und der Arbeitsrichtung der landwirtschaftlichen Arbeitsmaschine 1 die Dauer im unkritischen Bereich 510 ermittelt wird. Der unkritische Zeitraum kann beispielsweise 15 Minuten betragen. Beträgt eine Dauer der Ansteuerung der Messpunkte 54 voraussichtlich eine Minute, kann die Steuer- und Regeleinrichtung 23 bestimmen, dass die Ansteuerung der Messpunkte 54 innerhalb des unkritischen Zeitraums (d.h. während sich die landwirtschaftliche Arbeitsmaschine 1 im unkritischen Zustand befindet) stattfinden.

In einem weiteren Beispiel kann der richtige Ort bzw. Zeitpunkt für die Ansteuerung der Messpunkte 54 ermittelt werden. Ist beispielsweise vorauszusehen, dass die Dauer der Ansteuerung der Messpunkte 54 ca. 15 Sekunden beträgt, kann mittels der digitalen Feldkarte 400 und dem unkritischen Bereich 510 bestimmt werden, wo und ab wann die Ansteuerung der Messpunkte 54 erfolgen soll. Dabei kann mittels der Arbeitsrichtung und/oder der Fahrgeschwindigkeit der landwirtschaftlichen Arbeitsmaschine 1 eine benötigte Strecke für die Ansteuerung der Messpunkte 54 bestimmt werden. Beträgt die Fahrgeschwindigkeit beispielsweise ca. 4 km pro Stunde (d.h. ca. 1,15 Meter pro Sekunde), wird eine notwendige Strecke mit einer Länge von ca. 18 Metern für die Ansteuerung der Messpunkte 54 benötigt. Die Steuer- und Regeleinrichtung 23 kann mittels der Informationen über die notwendige Strecke bestimmen, wo und ab wann die Ansteuerung der Messpunkte 54 innerhalb des unkritischen Bereich 510 stattfinden soll. Dabei kann ein Bereich bzw. Ort im unkritischen Bereich 510 bestimmt werden, in dem sich die landwirtschaftlichen Arbeitsmaschine 1 gerade ausbewegt und nicht wenden muss, d.h. ungestört den Ernteprozess durchführen kann.

Wenn sich die landwirtschaftliche Arbeitsmaschine 1 im unkritischen Zustand befindet, wird ein Hinweis auf der Anzeigeeinrichtung 22 eingeblendet. Somit wird der Bediener informiert, dass die Messpunkte angesteuert werden können.

Es ist selbstverständlich möglich, dass eine Vielzahl von landwirtschaftlichen Arbeitsmaschinen 1 die digitale Feldkarte 400 gemeinsam nutzen. Dabei kann die digitale Feldkarte 400 beispielsweise auf einem Server gespeichert vorliegen, wobei jeder der landwirtschaftlichen Arbeitsmaschinen 1 Daten mit dem Server bzw. der digitalen Feldkarte 400 austauschen kann.

**Bezugszeichenliste:**

| | | | |
|---|---|---|---|
| 1 | landwirtschaftliche Arbeitsmaschine | 31 | interne Information |
| 2 | Mähdrescher | 32 | externe Information |
| 3 | Getreideschneidwerk | 33 | Information |
| 4 | Schrägförderer | 34 | Ausgangssignal |
| 5 | Erntegutstrom | 35 | Anzeigesignal |
| 6 | Dreschkorb | 36 | Arbeitsorgansignal |
| 7 | Dreschorgan | 37 | Arbeitsparameter |
| 8 | Umlenktrommel | 38 | Hotkey-Fenster |
| 9 | Trennrotor | 39 | Anzeigeelement |
| 10 | Trenneinrichtung | 40 | Qualitätsparameter |
| 11 | Körner | 41 | Überkehr |
| 12 | Rücklaufboden | 41a | Überkehrvolumen |
| 13 | Zuführboden | 41b | Kornanteil in der Überkehr |
| 14 | Siebebene | 42 | Abscheideverlust |
| 15 | Siebebene | 43 | Reinigungsverlust |
| 16 | Gebläse | 44 | Sollwertanzeiger |
| 17 | Reinigungseinrichtung | 45 | Einstellautomat |
| 18 | Elevator | 46 | Abscheideautomat |
| 19 | Korntank | 47 | Reinigungsautomat |
| 20 | Arbeitsorgan | 48 | Kennlinienfeld |
| 21 | Fahrzeugkabine | 49 | Kennlinie |
| 22 | Anzeigeeinheit | 50 | Einflussgröße |
| 23 | Steuer- und Regeleinrichtung | 51 | Bewertungsgröße |
| 24 | Bediener | 52 | Betriebspunkt |
| 25 | Bussystem | 53 | Bereich |
| 26 | Sensorsystem | 54 | Messpunkt |
| 27 | Anzeigeeinheit | 55 | Fläche |
| 28 | Fahrerassistenzsystem | 56 | Regelzustand |
| 29 | Informationen | 57 | Regelzustand |
| 30 | Recheneinheit | 58 | charakteristisches Symbol |
| | | 59 | Piktogramm |
| 400 | Digitale Feldkarte | 510 | Unkritischer Bereich |
| 410 | Arbeitsfläche | 520 | Hindernisbereich |
| 420 | Fläche mit überdurchschnittlicher Strohfeuchtigkeit | | |
| 430 | Feldeinschluss | | |
| 431 | Weiterer Feldeinschluss | | |
| 432 | Weiterer Feldeinschluss | | |
| 433 | Weiterer Feldeinschluss | | |
| 440 | Stelle für Lagergetreide | | |
| 441 | Weitere Stelle für Lagergetreide | | |
| 442 | Weitere Stelle für Lagergetreide | | |
| 443 | Weitere Stelle für Lagergetreide | | |
| 450 | Statisches Hindernis | | |
| 451 | Weiteres statisches Hindernis | | |
| 452 | Weiteres statisches Hindernis | | |
| 453 | Weiteres statisches Hindernis | | |
| 454 | Weiteres statisches Hindernis | | |
| 460 | Teilbreite | | |
| 470 | Wendebereich | | |
| 480 | Zaun | | |
| 490 | Feldgrenze | | |

## Patentansprüche

1. Landwirtschaftliche Arbeitsmaschine (1) mit zumindest einer Steuer- und Regeleinrichtung (23), die mittels hinterlegter Kennlinienfelder (48) zu einer automatisierbaren Einstellung und Überwachung von Arbeits- und/oder Qualitätsparametern (37, 40) der landwirtschaftlichen Arbeitsmaschine (1) eingerichtet ist, die einen Ernteprozess beeinflussen, sowie mindestens einer Anzeigeeinrichtung (22) zur Darstellung von Sollwerten und Istwerten der Arbeits- und/oder Qualitätsparameter (37, 40), und wobei das hinterlegte Kennlinienfeld (48) von Kennlinien (49) gebildet wird und die Kennlinien (49) in Abhängigkeit von Einflussgrößen (50) verschiedene Bewertungsgrößen (51) der landwirtschaftlichen Arbeitsmaschine (1) beschreiben, wobei die Bewertungsgrößen (51) von Qualitätsparametern (40) und die Einflussgrößen (50) von Arbeitsparametern (37) gebildet werden und das Kennlinienfeld (48) in einem aktiven Arbeitsbereich (53) liegende Betriebspunkte (52) und in den Randbereichen und/oder außerhalb des aktiven Arbeitsbereiches (53) liegende Messpunkte (54) umfasst, wobei die landwirtschaftliche Arbeitsmaschine (1) als Mähdrescher (2) ausgeführt ist, und der aktive Arbeitsbereich (53), der Bereich (53) des Kennlinienfelds (48) ist, in welchem die landwirtschaftliche Arbeitsmaschine (1) im Arbeitseinsatz arbeitet,
wobei die Steuer- und Regeleinrichtung (23) im Ernteprozess die Betriebspunkte (52) ermittelt und in das jeweilige Kennlinienfeld (48) übernimmt, wobei der die Betriebspunkte (52) umfassende Bereich des jeweiligen Kennlinienfeldes (48) den aktiven Arbeitsbereich (53) des Kennlinienfeldes (48) bildet und
die Steuer- und Regeleinrichtung (23) weiter eingerichtet ist, definiert Messpunkte (54) in den hinterlegten Kennlinienfeldern (48) anzusteuern, wobei diese gezielt angesteuerten Messpunkte (54) in den Randbereichen des Kennlinienfeldes (48) und/oder außerhalb des aktiven Arbeitsbereiches (52, 53) des jeweiligen Kennlinienfeldes (48) liegen,
**dadurch gekennzeichnet, dass** die Messpunkte (54) angesteuert werden, wenn sich die landwirtschaftliche Arbeitsmaschine (1) in einem unkritischen Zustand befindet.

2. Landwirtschaftliche Arbeitsmaschine (1) nach Anspruch 1,
wobei der unkritische Zustand basierend auf einer digitalen Feldkarte (400) ermittelt wird,
wobei die digitale Feldkarte (400) einen Hindernisbereich (520) und einen unkritischen Bereich (510) umfasst.

3. Landwirtschaftliche Arbeitsmaschine (1) nach Anspruch 2,
wobei der unkritische Bereich (510) und/oder der Hindernisbereich (520) basierend auf zumindest einem der folgenden ermittelt wird:
- einem Schlagbereich der landwirtschaftlichen Arbeitsmaschine (1);
- einer Arbeitsrichtung der landwirtschaftlichen Arbeitsmaschine (1);
- einem Wendebereich;
- zumindest einem statischen Hindernis;
- zumindest einer erfassten Teilbreite;
- zumindest einem Feldeinschluss;
- zumindest einem Lagergetreide;
- einer Strohfeuchtigkeit;
- einer mittels Satellitenbilder bestimmten Ertragsprognose; und/oder
- einer Feldqualität, wobei die Feldqualität basierend auf Drohnenbildern und/oder Wachstumsmodelle ermittelt wird.

4. Landwirtschaftliche Arbeitsmaschine (1) nach einem der Ansprüche 2 oder 3,
wobei der unkritische Zustand einen unkritischen Zeitraum umfasst und wobei der unkritische Zeitraum basierend auf zumindest einem der folgenden ermittelt wird:
- der digitalen Feldkarte (400);
- einer Fahrgeschwindigkeit der landwirtschaftlichen Arbeitsmaschine (1);
- einer Arbeitsrichtung der landwirtschaftlichen Arbeitsmaschine (1).

5. Landwirtschaftliche Arbeitsmaschine (1) nach einem der Ansprüche 2 bis 4,
wobei die digitale Feldkarte (400) mittels historischer Daten und/oder mittels aktueller Feldmessungen angepasst wird.

6. Landwirtschaftliche Arbeitsmaschine (1) nach einem der vorgehenden Ansprüche, wobei der unkritische Zustand basierend auf zumindest einem der folgenden ermittelt wird und/oder wobei die digitale Feldkarte (400) basierend auf zumindest einem der folgenden ermittelt wird:
- einer Topologiekarte;
- mittels On-Board Umfeldsensorik erfassten Daten;
- auf den aktuellen Erntegegebenheiten basierenden Daten;
- Satellitenbildern und/oder mittels Satellitenbilder bestimmten Ertragsprognosen; und/oder
- GPS Daten.

7. Landwirtschaftliche Arbeitsmaschine (1) nach einem der vorgehenden Ansprüche, wobei ein Hinweis auf der Anzeigeeinrichtung (22) einblendbar ist, wenn sich die landwirtschaftliche Arbeitsmaschine (1) im unkritischen Zustand befindet.

8. Landwirtschaftliche Arbeitsmaschine (1) nach einem der vorhergehenden Ansprüche, wobei die Arbeitsparameter (37) die Parameter "Maschinenparametereinstellung" (38b) und "Erntegutparameter" umfassen; und/oder
wobei die Qualitätsparameter (40) die Parameter "Abscheideverlust" (42), "Reinigungsverlust" (43), "Überkehr" (41), "Überkehrvolumen" (41a) und/oder "Kornanteil in der Überkehr" (41b) umfassen.

9. Landwirtschaftlicher Verbund umfassend eine Vielzahl von landwirtschaftlichen Arbeitsmaschinen (1) nach einem der vorgehenden Ansprüche, wobei die landwirtschaftlichen Arbeitsmaschinen (1) einer gemeinsamen digitalen Feldkarte (400) zugewiesen sind.
